Europäisches Patentamt

**European Patent Office**

**Office européen des brevets**

(19)

(11) Veröffentlichungsnummer: **0 253 975**
**B1**

(12) **EUROPÄISCHE PATENTSCHRIFT**

(45) Veröffentlichungstag der Patentschrift:
**13.12.89**

(51) Int. Cl.⁴: **B60K 9/00, B60K 5/08**

(21) Anmeldenummer: **87106914.2**

(22) Anmeldetag: **13.05.87**

(54) Antriebseinrichtung für ein Fahrzeug mit Notfahraggregat.

(30) Priorität: **25.07.86 DE 3625141**

(43) Veröffentlichungstag der Anmeldung:
**27.01.88 Patentblatt 88/4**

(45) Bekanntmachung des Hinweises auf die Patenterteilung:
**13.12.89 Patentblatt 89/50**

(84) Benannte Vertragsstaaten:
**DE FR GB IT SE**

(56) Entgegenhaltungen:
**DE-A- 2 810 086**
**DE-A- 3 009 503**
**DE-A- 3 226 647**
**DE-A- 3 303 448**
**DE-A- 3 501 608**

(73) Patentinhaber: **MAN Nutzfahrzeuge Aktiengesellschaft,
Dachauer Strasse 667 Postfach 50 06 20,
D-8000 München 50(DE)**

(72) Erfinder: **Lexen, Gerald, Johann-Emmerstrasse 1,
D-8000 München 50(DE)**

## Beschreibung

Die Erfindung betrifft eine Antriebseinrichtung für ein Fahrzeug mit Merkmalen der im Oberbegriff des Anspruchs 1 angegebenen Art.

Die Erfindung geht dabei aus von einer aus der DE-A1 2 810 086 bekannten Antriebseinrichtung, die in der Praxis in Fahrzeugen der Anmelderin realisiert ist. Bei diesen Fahrzeugen handelt es sich um Stadt-Linienbusse oder andere im Stop-And-Go-Verkehr betriebene Fahrzeuge, z.B. kommunale Müllsammel-Fahrzeuge. Bei Fahrzeugen, die im Linien- oder Routendienst eingesetzt sind und mit denen ein gewisser Fahrplan oder zeitlicher Rahmen unbedingt eingehalten werden muß, erweist es sich als äußerst nachteilig, wenn der Antriebsmotor des Fahrzeugs oder die Energieversorgung für den Antriebsmotor ausfällt. Ist dies der Fall, so ist das Fahrzeug in der Regel nicht mehr einsatzbereit und muß durch ein anderes ersetzt werden. Es stellt dann, bis es abgeschleppt wird, in der Regel ein Verkehrshindernis dar.

Es ist nun zwar aus der DE-A1 3 501 608 schon ein Fahrzeug, insbesondere Nutzfahrzeug, bekannt, bei dem einer Hauptantriebseinrichtung eine Hilfsantriebseinrichtung zugeordnet ist. Die Hauptantriebseinrichtung besteht aus einem Verbrennungsmotor, der unmittelbar oder über ein Getriebe eine hydrostatische Verstellpumpe antreibt, welche über hydraulische Verbindungsleitungen einen am Achsantriebsstrang angeschlossenen hydraulischen Motor steuert. Solche rein hydrostatische Antriebe haben im Gegensatz zu hydromechanischen Leistungsverzweigungsgetrieben gemäß der DE-A1 2 810 086 einen relativ schlechten Wirkungsgrad. Außerdem haftet einer solchen rein hydrostatischen Leistungsübertragung der weitere Nachteil einer relativ hohen Lärmentwicklung und Wärmeentwicklung im Fahrbetrieb an. Insbesondere die Lärmentwicklung verhinderte bisher einen serienmäßigen Einbau solcher rein hydrostatischer Leistungsübertragungseinrichtungen in Omnibussen; aber auch die Wärmeentwicklung wäre nur mit aufwendigen Zusatzmaßnahmen zu beherrschen.

Die Hilfsantriebseinrichtung dieses bekannten Fahrzeuges besteht aus einem elektrohydraulischen Nebenantriebsstrang. Hierzu ist eine an die Druckleitungen des hydrostatischen Hauptantriebsstranges angeschlossene hydrostatische Pumpe vorgesehen, die von einem Elektromotor, insbesondere einem Reihenschluß-Gleichstrommotor, antreibbar ist, der von einer Batterie gespeist wird. Zur Speisung der Batterie ist wiederum ein vom Verbrennungsmotor des Hauptantriebsstranges aus angetriebener Generator vorhanden. Zwischen Elektromotor und Batterie ist ferner eine Impulssteuerung vorgesehen, mit der der Wechsel vom einen auf den anderen Antriebsstrang und dessen Betrieb beherrschbar sind.

Dieser hydrostatische Hilfsantrieb ist aber ausdrücklich nur für einen Fahrbetrieb des Fahrzeuges mit einer Geschwindigkeit bis zu 10 km/h ausgelegt. Dies wird insofern verständlich, als bei einer Auslegung für höhere Fahrgeschwindigkeiten dieser elektrohydrostatische Hilfsantrieb auf eine wesentlich höhere Leistungsabgabe ausgelegt sein müßte, also wenigstens 1/3 der Leistungsabgabe des Hauptantriebsstranges betragen müßte. Geht man davon aus, daß bei einem Nutzfahrzeug vom Hauptantriebsstrang in der Regel eine Leistung in der Größenordnung von 100 kW erbracht wird, dann wird deutlich, daß ein Hilfsantrieb, ausgelegt für etwa 40 bis 50 kW, nach der bekannten Lösung in der Praxis in einem Fahrzeug nicht realisierbar ist, aus folgenden Gründen: Es müßte schon die Batterie hinsichtlich ihrer Speicherkapazität und Leistungsabgabe auf diese Hilfsantriebsleistung ausgelegt sein. Eine solche Batterie wäre ein räumlich monströses Gebilde, für das im Fahrzeug in der Regel kein Platz vorhanden ist. Außerdem wäre eine solche monströse Batterie sehr schwergewichtig, so daß sich ein um einige hundert Kilo größeres Fahrzeuggewicht ergäbe, das im Normalfahrbetrieb vom Hauptantriebsstrang nutzlos mitgeschleppt werden müßte. Außerdem wäre vom Motor des Hauptantriebsstranges ein voluminöser Generator anzutreiben, der die für den Fahrzeugantrieb benötigte Abtriebsleistung des Motors erheblich in nachteiliger Weise reduzieren würde. Auch der Gleichstrom-Elektromotor und die hydrostatische Pumpe des Hilfsantriebes müßten auf die Leistungsabgabe in der Größenordnung von 40 bis 50 kW ausgelegt sein, was ebenfalls sehr teuere platzraubende Aggregate bedeutet.

Ein echter Notfahrbetrieb wäre mithin mit der bekannten Lösung absolut nicht realisierbar. Das heißt, die bekannte Hilfsantriebseinrichtung muß hinsichtlich ihrer Aggregate, was deren Größe, Platzbedarf und Leistungsabgabe anbelangt, absolut nur in dem Zusammenhang betrachtet werden, was als Ergebnis angestrebt ist, nämlich eine Kriechgangfahrt mit einer Geschwindigkeit von bis zu 10 km/h. Auch schon nur für diesen Fall ist der aggregatseitige Zusatzaufwand sehr beträchtlich.

Es ist daher Aufgabe der Erfindung, eine Antriebseinrichtung für ein Fahrzeug der eingangs genannten Art so weiterzubilden, daß auch bei etwaigem Ausfall des Antriebsmotors oder dessen Energieversorgung ein echter Notfahrbetrieb des Fahrzeuges ohne größere Behinderung des anderweitigen Verkehrs möglich und für die zusätzlichen Aggregate nur ein vergleichsweise geringer Platzbedarf und Kostenzusatzaufwand vonnöten ist.

Diese Aufgabe wird erfindungsgemäß bei einer Antriebseinrichtung der eingangs genannten Art durch deren Ergänzung mit einem Notfahraggregat mit den im Kennzeichen des Anspruchs 1 angegebenen Merkmalen gelöst.

Das erfindungsgemäße Notfahraggregat umfaßt als Antriebsquelle einen Hilfsmotor, der durch eine Brennkraftmaschine gebildet ist. Versuche haben gezeigt, daß praktisch nur mit einer eigenständigen Brennkraftmaschine, die trotz der geforderten Leistungsabgabe in der Größenordnung von beispielsweise 40 bis 50 kW relativ klein ist und wenig Zusatzraum beansprucht und gegebenenfalls mit Brennstoff aus dem gleichen Tank wie der Hauptantriebsmotor versorgt werden kann, ein echter Notfahrbetrieb mit vertretbarem Aufwand sichergestellt ist. Durch das Vorsehen einer verhältnismäßig kleinen Brennkraftmaschine als Hilfsmotor kann vollständig auf eine(n) für gleiche Leistung ausgelegte(n) Generator, Batterie und Elektromotor verzichtet werden. Außerdem ist ein Fahrzeug mit einer Brennkraftmaschine als Hilfsmotor in seiner Reichweite praktisch unbeschränkt, was bei einem von einer Batterie versorgten Elektromotor bei Ausfall des Hauptantriebsmotors oder dessen Energieversorgung wegen des dann nicht gegebenen Generatorantriebes nicht der Fall ist; d.h., dort wäre die Notfahrt durch den gespeicherten Energiegehalt der Batterie auf relativ kurze Strecken beschränkt.

Dadurch, daß das Notfahraggregat über den reinen Notfahrbetrieb hinaus auch für die Übernahme zumindest jener Zusatzfunktion ausgebildet ist, nämlich zusammen mit dem Haupt-Antriebsmotor des Fahrzeugs, dessen Spitzenleistungsbedarf zu decken, ist es in vorteilhafter, kostengünstiger und raumsparender Weise möglich, als (Haupt-)Antriebsmotor einen leistungsmäßig schwächeren zu verwenden. Eine benötigte Spitzenleistung kann dann durch Zuschalten des Notfahraggregates auf einfache Weise gedeckt werden, wobei letzteres den erforderlichen Leistungsmehrbedarf erbringt.

Bei der erfindungsgemäßen Lösung treibt die als Hilfsmotor dienende Brennkraftmaschine des Notfahraggregates einen verstellbaren Hydrowandler an. Bei Aktivierung des Notfahraggregates wird durch dessen dann vom Hilfsmotor angetriebenen Hydrowandler hydrostatisch Leistung auf die Hydrowandler des Leistungsverzweigungsgetriebes und über dessen Planetendifferential auf die Antriebsachse übertragen. Dabei ist der Wirkungsgrad relativ hoch, weil der ohnehin hohe Wirkungsgrad des hydrostatisch-mechanischen Leistungsverzweigungsgetriebes ausgenutzt wird.

Ein weiterer Vorteil dieses erfindungsgemäßen Notfahraggregates besteht darin, daß es gegebenenfalls auch noch für andere Zusatzzwecke ausnutzbar ist, welche in den Unteransprüchen 2 und 3 angegeben sind.

Nachstehend sind Einzelheiten der erfindungsgemäßen Lösung anhand der Zeichnung noch näher erläutert.

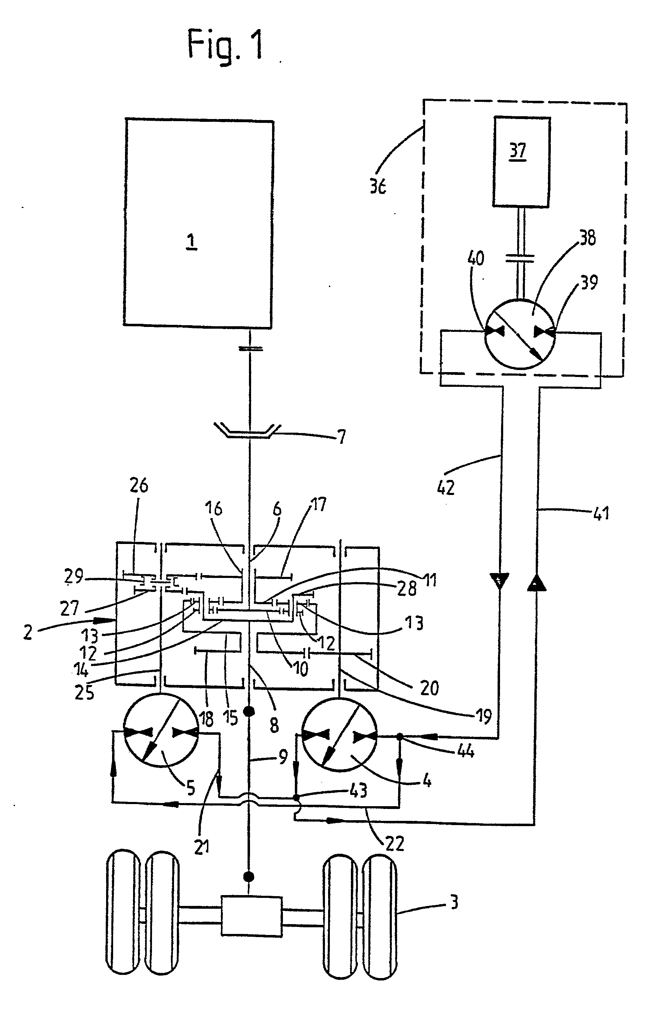

In der Zeichnung ist in den Figuren 1 bis 3 jeweils weitgehend schematisiert eine Ausführungsform einer Antriebseinrichtung für ein Fahrzeug mit erfindungsgemäßem Notfahraggregat dargestellt.

In den Figuren sind gleiche bzw. einander entsprechende Bauteile der Übersichtlichkeit wegen mit gleichen Bezugszeichen angezogen.

In der Zeichnung sind als Teile einer Antriebseinrichtung eines Fahrzeugs mit (1) ein Antriebsmotor, mit (2) ein als Kennungswandler betriebenes Getriebe und mit (3) eine Antriebsachse bezeichnet.

Bei dem Fahrzeug handelt es sich insbesondere um ein solches, das im Linien- oder Routendienst eingesetzt wird und mit dem ein gewisser Fahrplan oder zeitlicher Rahmen unbedingt eingehalten werden soll. Außerdem kann es sich um ein Fahrzeug handeln, das in Gebieten mit dünnem Servicenetz zum Einsatz kommt.

Bei dem Antriebsmotor (1) des Fahrzeugs kann es sich um eine dieselkraftstoff- oder benzinbetriebene Brennkraftmaschine oder um einen Elektromotor handeln, der seine Energie von einer Batterie oder über einen Stromabnehmer von einer stromführenden Leitung, beispielsweise Oberleitung, bezieht. Letzteres wäre im Falle beispielsweise eines Oberleitungsbusses gegeben.

Das Getriebe (2) ist durch ein, insbesondere vierwelliges, hydrostatisch-mechanisches Leistungsverzweigungsgetriebe gebildet, das mindestens zwei Arbeitsbereiche und wenigstens zwei Hydrowandler (4, 5) aufweist, Derartige Getriebe sind bisher schon in Verbindung mit Linienbussen bekannt geworden. Eine Eingangswelle (6) ist entweder direkt oder über eine Kupplung (7) mit dem Antriebsmotor (1) verbunden bzw. verbindbar.

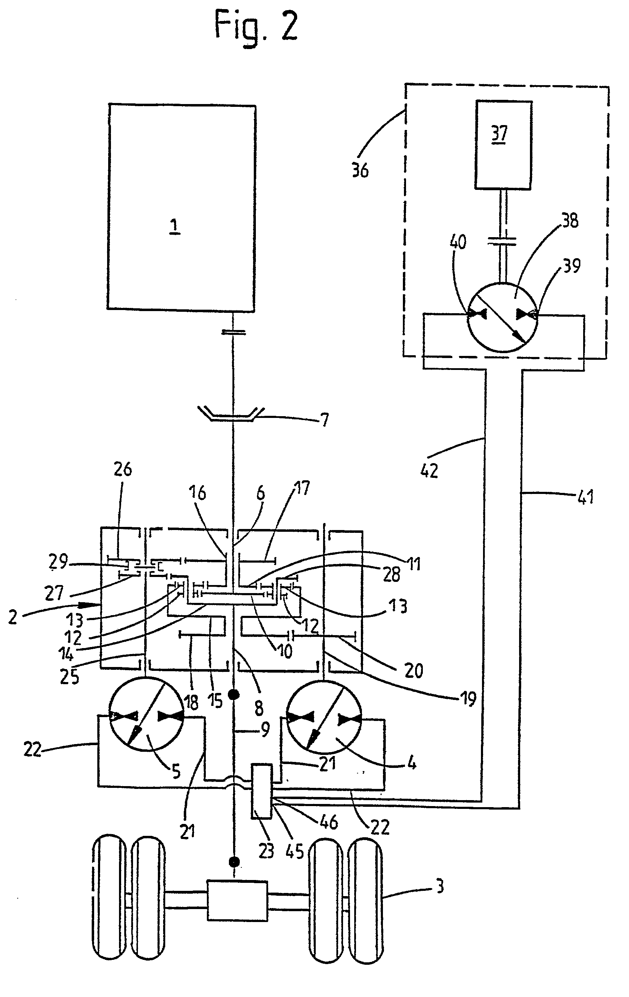

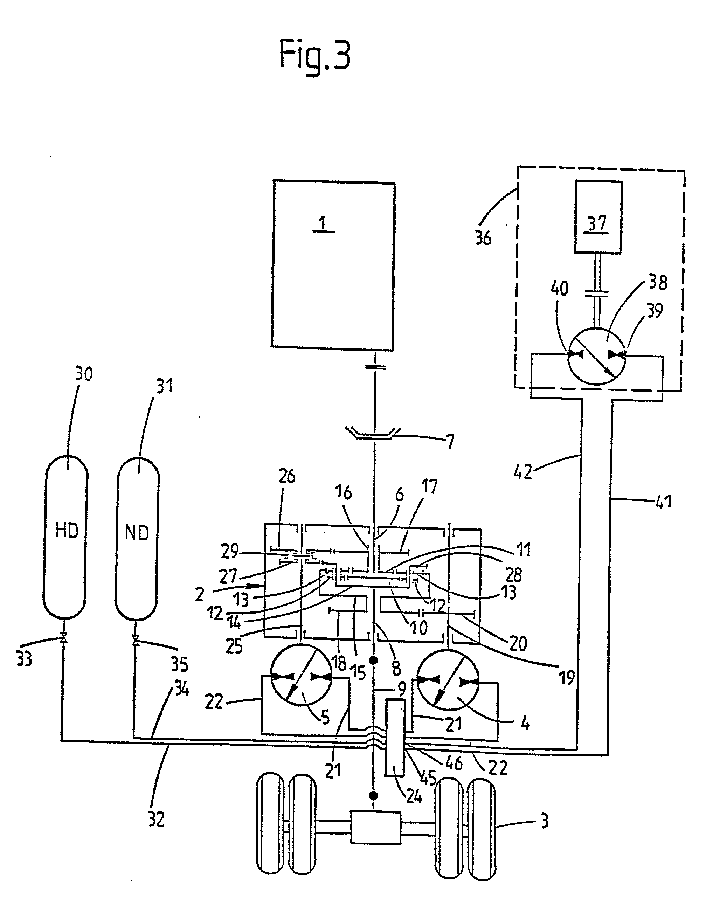

Mit (8) ist eine Getriebeausgangswelle bezeichnet, die mit dem Achsantriebsstrang (9) des Fahrzeugs in Verbindung steht. Der durch ein Planetendifferential gebildete mechanische Teil des Leistungsverzweigungsgetriebes (2) umfaßt ein großes, fest mit der Eingangswelle (6) verbundenes Sonnenrad (10), ein kleines Sonnenrad (11), mehrere jeweils auf einer Hohlwelle sitzende Doppelplanetenräder (12, 13), einen mit der Getriebeausgangswelle (8) fest verbundenen Steg (14) und ein Hohlrad (15). Letzteres weist eine Innenverzahnung auf, mit die Planetenräder (13) kämmen. Das kleine Sonnenrad (11) ist drehfest mit einer Hohlwelle (16) verbunden, die auf der Eingangswelle (6) gelagert ist und außerdem ein Zahnrad (17) trägt. Drehfest mit dem Hohlrad (15) ist ein Zahnrad (18) verbunden, das mit einem drehfest auf einer Welle (19) sitzenden Zahnrad (20) kämmt. Die Welle (19) stellt die mechanische Verbindung zum Hydrowandler (4) her. Letzterer kann ebenso wie der Hydrowandler (5) in beiden Richtungen als Motor oder Pumpe betrieben werden und ist mit letzterem (5) über hydraulische Steuerleitungen (21, 22) im Fall von Fig. 1 direkt, im Fall von Fig. 2 unter Zwischenschaltung eines Steuerblockes (23) und im Fall von Fig. 3 unter Zwischenschaltung eines anderen Steuerblockes (24) verbunden. Das auf der Hohlwelle (16) sitzende Zahnrad (17) kämmt mit einem drehbar auf einer Welle (25) angeordneten Zahnrad (26). Die Welle (25) stellt die mechanische Verbindung zwischen dem Hydrowandler (5) und dem Planetendifferential her. Außerdem ist auf der Welle (25) ein weiteres Zahnrad (27) drehbar angeordnet, das mit einem fest am Steg (14) angeordneten Zahnrad (28) in Eingriff steht. Mit (29) ist eine Wechselschaltkupplung bezeichnet, mit der in der einen Schaltstellung das Zahnrad (27) und in der anderen Schaltstellung das andere Zahnrad (26) mit der Welle (25) drehfest gekoppelt werden kann. Zwischen beiden Schaltstellungen kann die Wechselschaltkupplung (29) eine 0-Stellung einnehmen, in der keines der beiden Zahnräder (26, 27) mit der Welle (25) verbunden ist. Die Drehzahl der Getriebeausgangswelle (8) summiert sich aus der Drehzahl des großen Sonnenrades (10) und des Hohlrades (15), die die Umlaufgeschwindigkeit der Planetenräder (12, 13) bzw. des Steges (14) festlegen. Der Hydrowandler (4) bewirkt durch seine Drehzahl und seine Drehrichtung über die Zahnräder (20) und (18) Drehzahl und Drehrichtung des Hohlrades (15).

In Verbindung mit den Ausführungsbeispielen gemäß Fig. 1 und 2 ergibt sich dabei folgende Wirkungsweise:

Für den Fall, daß das Fahrzeug beschleunigt werden soll, arbeitet der Hydrowandler (4) in einem ersten Arbeitsbereich des Leistungsverzweigungsgetriebes (2) (n Ausgang : h Eingang ≤ 50%) bei einer Drehrichtung des Hohlrades (15) umgekehrt zur Drehrichtung des großen Sonnenrades (10) als Pumpe und liefert diese umgesetzte Leistung über die Leitungen (21, 22) an den Hydrowandler (5). Dieser arbeitet dann als Motor und treibt die Welle (25) an. Die Wechselschaltkupplung (29) befindet sich dabei in einer Schaltstellung, in der das Zahnrad (27) mit der Welle (25) gekuppelt und damit die Getriebeverbindung über das Zahnrad (28) und den Steg (14) für Leistungsübertragung an die Getriebeausgangswelle (8) angeschlossen ist.

In einem zweiten Arbeitsbereich (n Ausgang : h Eingang ≥ 50%) arbeitet bei gleicher Drehrichtung des Hohlrades (15) und des Sonnenrades (10) der Hydrowandler (4) als Motor. Dieser erhält dabei seine Leistung vom Hydrowandler (5) über die Steuerleitungen (21, 22) zugeführt und arbeitet in diesem Bereich als Pumpe. Die Wechselschaltkupplung (29) befindet sich dabei in einer Schaltstellung, in der das Zahnrad (26) mit der Welle (25) gekuppelt ist. Der Hydrowandler (5) bekommt in diesem Fall Antriebsleistung also über die Doppelplanetenräder (12, 13) und die Hohlwelle (16) mit den Zahnrädern (11 und 17) vom großen Sonnenrad (10) her zugeführt.

Wenn der Hydrowandler (4) stillsteht, dann wird praktisch die gesamte Leistung mechanisch vom Planetendifferential übertragen. In dieser Situation erfolgt die Umschaltung der Wechselschaltkupplung (29) vom Zahnrad (27) zum Zahnrad (26) hin bei steigender und vom Zahnrad (26) zum Zahnrad (27) hin bei sinkender Drehzahl der Getriebeausgangswelle (8).

Wenn das Fahrzeug stillsteht, dann steht auch der Hydrowandler (5) still. In diesem Fall dreht der Hydrowandler (4) proportional mit der Drehzahl des Antriebsmotors (1).

Es sei an dieser Stelle darauf hingewiesen, daß das vorbeschriebene Getriebe (2) nicht notwendigerweise so ausgebildet sein muß, wie in den Figuren 1 bis 3 dargestellt.

Die in Fig. 3 dargestellte Antriebseinrichtung unterscheidet sich hinsichtlich der zu betrachtenden Aggregate des Fahrzeugs von jenem nach Fig. 1 und 2 lediglich darin, daß dort dem Leistungsverzweigungsgetriebe (2) zur Bildung einer Bremsenergierückgewinnungseinrichtung verschiedene Teile derselben zugeordnet sind. Eine solche Bremsenergierückgewinnungseinrichtung ist bislang in Verbindung mit städtischen Linienbussen bekannt geworden. Im einzelnen weist diese Einrichtung einen Hochdruckhydrospeicher (30), einen Niederdruckhydrospeicher (31), eine eigene Steuerung oder den speziell hierfür ausgebildeten Steuerblock (24), eine von letzterem abzweigende und zum Hochdruckhydrospeicher (30) hinführende Zuleitung (32) mit steuerbarem Absperrventil (33) und eine vom Steuerblock (24) abzweigende und zum Niederdruckhydrospeicher (31) hinführende Zuleitung (34) mit steuerbarem Absperrventil (35) auf. Diese Teile sind in ihrer gegenseitigen Zuordnung und Funktion in Verbindung mit besagten Stadtlinienbussen, was die Ladung des Hockdruckhydrospeichers (30) beim Bremsen des Fahrzeugs und die Entladung des Hochdruckhydrospeichers (30) beim Anfahren des Fahrzeugs anbelangt, bekannt.

Unabhängig von der jeweiligen Ausgestaltung der normalen Antriebseinrichtung des Fahrzeugs, ist dieser ein Notfahraggregat (36) zugeordnet, daß aus einem Hilfsmotor (37) und einem hiervon angetriebenen verstellbaren Hydrowandler (38) besteht. Bei letzterem handelt es sich um ein käufliches Aggregat der Schrägachsen-, Schrägscheiben- oder ähnlichen Bauart. Die beiden Anschlüsse (39, 40) des Hydrowandlers (38) sind jeweils über eine Leitung (41 bzw. 42) entweder wie beim Ausführungsbeispiel gemäß Fig. 1 mit den hydraulischen Anschlüssen des Hydrowandlers (4) direkt oder einem Anschluß (45 bzw. 46) am Steuerblock (23) (Fig. 2) bzw. (24) (Fig. 3) verbunden.

Bei dem Hilfsmotor (37) handelt es sich um einen Verbrennungsmotor. Dieser Motor kann, muß jedoch nicht notwendigerweise die gleiche Leistung erbringen wie der Antriebsmotor (1).

Das Notfahraggregat (36) kann bei Ausfall des Antriebsmotors (1) oder dessen Energieversorgung in Betrieb genommen werden. Dies kann automatisch oder manuell mittels einer entsprechenden Steuereinrichtung bzw. Startvorrichtung erfolgen. Das Notfahraggregat kann jedoch auch während des normalen Fahrbetriebes zum Nachladen des Hochdruckhydrospeichers (30) benutzt werden.

Nach dem Start des Hilfsmotors (37) wird durch den nun angetriebenen Hydrowandler (38) hydrostatisch Leistung den Hydrowandlern (4, 5) des Leistungsverzweigungsgetriebes (2) und über dessen Planetendifferential der Antriebsachse (3) des Fahrzeuges zugeführt. Im Fall von Fig. 1 wird diese Leistung direkt dem Hydrowandler (4) zugeführt, der diese an den Hydrowandler (5) weiterleitet. Im Fall der Ausführungsbeispiele gemäß Fig. 2 und 3 wird diese Leistungsübertragung durch entsprechende Steuerung innerhalb des Steuerblockes (23) bzw. (24) besorgt. Im Fall des Ausführungsbeispieles gemäß Fig. 3 wird die beim Anfahren des Fahrzeuges notwendige Leistung durch Entladung des Hockdruckhydrospeichers (30) bereitgestellt, so daß bei in Betrieb genommenem Notfahraggregat (36) dieses Leistung nur in den anschließenden Fahrbereichen abzugeben hat.

Die Bauteile des Notfahraggregates (36) sind den Platzverhältnissen des Fahrzeugs entsprechend gut unterzubringen. Wegen der rein hydraulischen Verbindung zum Leistungsverzweigungsgetriebe (2) sind diesbezüglich auch keine speziellen räumlichen Zuordnungen nowendig. Es ist ein regelungstechnisch geringer Aufwand erforderlich. Außerdem kann der Hydrowandler (38) des Notfahraggregates (36) bei laufendem Hilfsmotor (37) auch als Dauerbremse benutzt werden, wobei die diesbezügliche Schaltung und Steuerung durch den Steuerblock (23) bzw. (24) oder eine andere Einrichtung erfolgt. Schließlich ist es aufgrund des vorhandenen Notfahraggregates (36) auch möglich, den Antriebsmotor (1) des Fahrzeugs leistungsmäßig begrenzt auszulegen, und zwar so, daß im Fall einer benötigten Spitzenleistung dieser dann erforderliche Leistungsmehrbedarf vom dann zugeschalteten Notfahraggregat bereitgestellt wird.

**Patentansprüche**

1. Antriebseinrichtung für ein Kraftfahrzeug, mit
– einem Antriebsmotor (1),
– einem vom Antriebsmotor (1) angetriebenen hydrostatischmechanischen Leistungsverzweigungsgetriebe (2), das aus einem Planetendifferential (6, 8, 10 bis 20, 25 bis 29) und mindestens zwei Hydrowandlern (4, 5) besteht, wobei der besagte Antriebsmotor (1) mit der Eingangswelle (6) des besagten Planetendifferentiales und die Ausgangswelle (8) des besagten Planetendifferentiales mit dem Achsantriebsstrang (9) des Kraftfahrzeugs verbunden ist, und wobei die beiden besagten Hydrowandler (4, 5) über je eine eigene Welle (19 bzw. 25) getrieblich an einer unterschiedlichen Welle (15, 18 bzw. 11, 16 bzw. 8) des besagten Planetendifferentiales angeschlossen sind,
dadurch gekennzeichnet,
– daß der vorstehend definierten Antriebseinrichtung ein hierauf abgestimmtes Notfahraggregat (36) zugeordnet ist, das aus einem durch eine Brennkraftmaschine gebildeten Hilfsmotor (37) und einem von diesem antreibbaren, verstellbaren Hydrowandler (38) besteht, wobei dieses Notfahraggregat (38) bedarfsweise aktivierbar ist und nach seiner Aktivierung durch den dann von besagtem Hilfsmotor (37) angetriebenen Hydrowandler (38) hydrostatisch Leistung über die beiden Hydrowandler (4, 5) des besagten Leistungsverzweigungsgetriebes (2) auf dessen Planetendifferential und über dieses an den besagten Achsantriebsstrang (9) des Kraftfahrzeuges überträgt, und
– daß das Notfahraggregat (36) ferner über den reinen Notfahrbetrieb hinaus auch für die Übernahme zumindest jener Zusatzfunktion ausgebildet ist, nämlich zusammen mit dem Antriebsmotor (1) den Spitzenleistungsbedarf des Fahrzeugs zu decken, wobei der Antriebsmotor (1) leistungsmäßig begrenzt und derart ausgelegt ist, daß im Fall einer zum Antrieb des Fahrzeugs benötigten Spitzenleistung der dann über die Leistung des Antriebsmotor (1) hinaus erforderliche Leistungsmehrbedarf vom dann zuschaltbaren Notfahraggregat (36) bereitstellbar ist.

2. Antriebseinrichtung nach Anspruch 1, dadurch gekennzeichnet, daß das Notfahraggregat (36) auch für die Übernahme der Zusatzfunktion einer Dauerbremse (Retarder) aktivierbar ist, wobei in diesem Fall dessen Hydrowandler (38) bei laufendem Hilfsmotor (37) während einer Bremsphase wirksam ist und die erforderlichen Schalt- und Steuerungsorgane in einem hydraulischen Steuerblock (23 bzw. 24) gegeben sind, an dem an auch die Hydrowandler (4, 5, 38) über hydraulische Steuerleitungen angeschlossen sind.

3. Antriebseinrichtung nach Anspruch 1, wobei dem besagten hydrostatisch-mechanischen Leistungsverzweigungsgetriebe (2) eine Bremsenergierückgewinnungseinrichtung zugeordnet ist, bestehend aus
– einem Hochdruckhydrospeicher (30),
– einem Niederdruckhydrospeicher (31),
– eine in einem hydraulischen Steuerblock (23 bzw. 24) integrierte Steuerung für die Beherrschung der Lade- und Entladevorgänge, an welchem Steuerblock über hydraulische Leitungen, (21, 22, 32, 34, 41, 42) die Hydrowandler (4, 5, 38), der Hochdruckhydrospeicher (30) und der Niederdruckhydrospeicher (31) angeschlossen sind,
wobei beim Bremsen des Kraftfahrzeuges dessen kinetische Energie über das besagte Leistungsverzweigungsgetriebe (2) in im Hochdruckhydrospeicher (30) abspeicherbare potentielle Druckenergie umsetzbar und diese gespeicherte Druckenergie zum Anfahren des Kraftfahrzeuges wieder aus dem Hochdruckhydrospeicher (30) durch Entladung desselben über das besagte Leistungsverzweigungsgetriebe (2) auf den Achsantriebsstrang (9) übertragbar ist, dadurch gekennzeichnet, daß daß Notfahraggregat (36) auch für die Übernahme jener Zusatzfunktion ausgebildet ist, nämlich, daß es während des normalen Fahrbetriebes des Kraftfahrzeuges bei Bedarf zum Nachladen des besagten Hochdruckhydrospeichers (30) aktivierbar ist.

**Claims**

1. A propulsion device for a motor vehicle, having
– a driving engine (1),
– a hydrostatic-mechanical torque-division transmission (2) which is driven by the driving engine (1) and which comprises a planetary gear differential (6, 8, 10 to 20, 25 to 29) and at least two hydraulic converters (4, 5), the said driving engine (1) being connected to the input shaft (6) of the said planetary gear differential and the ouput shaft (8) of the said planetary gear differential being connected to the axle-drive train (9) of the motor vehicle, and the said two hydraulic converters (4, 5) being connected in a driving manner by way of their own shaft (19 and 25 respectively) in each case to a different shaft (15, 18 or 11, 16 or 8 respectively) of the said planetary gear differential,
characterized in that
– the propulsion device defined above has associated with it an emergency drive unit (36) which is adapted thereto and which comprises an auxiliary engine (37) formed by an internal combustion engine and an adjustable hydraulic converter (38) drivable thereby, the said emergency drive unit (36) being actuable when required and, after its actuation by the hydraulic converter (38) then driven by the said auxiliary engine (37), transmitting power hydrostatically by way of the two hydraulic converters (4, 5) of the said torque-division transmission (2) to the planetary gear differential thereof and by way of the latter to the said axle drive train (9) of the motor vehicle, and
– the emergency drive unit (36) is additionally designed for performing at least that additional function beyond simple emergency running, namely covering together with the driving engine (1) the peak power demand of the vehicle, the driving engine (1) being limited in terms of power and being designed in such a way that in the event of peak power required for driving the vehicle the increased power demand required beyond the power of the driving engine (1) is available from the connectable emergency drive unit (36).

2. A propulsion device according to Claim 1, characterized in that the emergency drive unit (36) is also actuable for performing the additional function of a retarder, in this case the hydraulic converter (38) being active with the auxiliary engine (37) running during a braking phase and the necessary switching and control member being provided in an hydraulic control block (23 and 24 respectively) to which the hydraulic converters (4, 5, 38) are also connected by way of hydraulic control lines.

3. A propulsion device according to Claim 1, a braking-energy recovery device being associated with the said hydrostatic-mechanical torque-division transmission (2), comprising
– a high-pressure hydraulic accumulator (30),
– a low-pressure hydraulic accumulator (31),
– a control integrated in an hydraulic control block (23 and 24 respectively) for controlling the charging and discharging procedures, to which control block the hydraulic converters (4, 5, 38), the high-pressure hydraulic accumulator (30) and the low-pressure hydraulic accumulator (31) are connected by way of hydraulic lines (21, 22, 32, 34, 41, 42),
wherein on braking the vehicle its kinetic energy is convertible by way of the said torque-division transmission (2) into potential pressure energy which can be stored in the high-pressure hydraulic accumulator (30) and in order to start the motor vehicle the said stored pressure energy can be transmitted again to the axle drive train (9) from high-pressure hydraulic accumulator (30) by discharging the latter by way of the said torque-division transmission (2), characterized in that the emergency drive unit (36) is also designed for performing that additional function, namely that during the normal running of the motor vehicle it is actuable where necessary for recharging the said high-pressure hydraulic accumulator (30).

## Revendications

1. Dispositif de propulsion pour un véhicule automobile avec:
– un moteur de propulsion (1),
– une transmission hydraulique-mécanique de répartition de puissance (2) entraînée par le moteur de propulsion (1) et qui est constituée par un différentiel planétaire (6, 8, 10 à 20, 25 à 29) et par au moins deux convertisseurs hydrauliques (4, 5), le moteur de propulsion précité (1) étant relié à l'arbre d'entrée (6) du différentiel planétaire précité, et l'arbre de sortie (8) de ce différentiel planétaire étant relié à la ligne d'entraînement d'essieu (9) du véhicule automobile, et chacun des deux convertisseurs hydrauliques précités (4, 5) étant en liaison d'entraînement, par l'intermédiaire d'un arbre (19 ou bien 25) qui lui est propre, avec un arbre différent (15, 18 ou bien 11, 16 ou bien 8) du différentiel planétaire précité, dispositif de propulsion caractérisé
– en ce qu'à ce dispositif de propulsion défini ci-dessus est associé un groupe d'entraînement de secours (36) qui lui est adapté, et qui comporte un moteur auxiliaire (37), constitué par un moteur à combustion interne, et un convertisseur hydraulique réglable (38), susceptible d'être entraîné par ce moteur auxiliaire, ce groupe d'entraînement de secours (36) étant susceptible d'être activé en cas de besoin et, après son activation, transmettant grâce au convertisseur hydraulique (38), alors entraîné par ce moteur auxiliaire (37), de la puissance hydraulique par l'intermédiaire des deux convertisseurs hydrauliques (4, 5) de la transmission de répartition de puissance (2), au différentiel planétaire de celle-ci, et par l'intermédiaire de ce différentiel, à la ligne d'entraînement d'essieu (9) du véhicule automobile,
– en ce que le groupe d'entraînement de secours (36), au-delà de son exploitation en entraînement de secours proprement dit, est également prévu pour assumer au moins cette fonction supplémentaire consistant à couvrir, en commun avec le moteur de propulsion (1), les besoins du véhicule automobile en puissance de pointe, le moteur de propulsion (1) étant alors limité en puissance et conçu de façon que, dans le cas où une puissance de pointe est nécessaire pour la propulsion du véhicule, le besoin supplémentaire de puissance alsors nécessaire au-delà de la puissance du moteur de propulsion (1), peut être fourni par le groupe d'entraînement de secours (36) alors susceptible d'être mis en circuit.

2. Dispositif de propulsion selon la revendication 1, caractérisé en ce que le groupe d'entraînement de secours (36) est également susceptible d'être activé pour assurer la fonction supplémentaire d'un frein continu (retardateur), auquel cas le convertisseur hydraulique (38) de ce groupe, lorsque le moteur auxiliaire (37) tourne, agit pendant une phase de freinage, tandis que les organes de commutation et de commande nécessaires sont prévus dans un bloc hydraulique de commande (23 ou bien 24), auquel sont également raccordés, par l'intermédiaire de canalisations hydrauliques de commande, les convertisseurs hydrauliques (4, 5, 38).

3. Dispositif de propulsion selon la revendication 1, dispositif dans lequel, à la transmission hydraulique-mécanique (2) de répartition de la puissance, est associé un dispositif de récupération de l'énergie de freinage, constitué par:
– un accumulateur hydraulique haute pression (30)
– un accumulateur hydraulique basse pression (31)
– une commande intégrée dans un bloc de commande hydraulique (23 ou bien 24) pour maîtriser les processus de charge et de décharge, bloc de commande auquel sont raccordés, par l'intermédiaire de canalisations hydrauliques (21, 22, 32, 34, 41, 42), les convertisseurs hydrauliques (4, 5, 38), l'accumulateur hydraulique haute pression (30) et l'accumulateur hydraulique basse pression (31), tandis que lors du freinage du véhicule automobile, l'énergie cinétique de celui-ci est susceptible d'être convertie, par l'intermédiaire de la transmission (2) de répartition de l'énergie, en énergie potentielle de pression susceptible d'être accumulée dans l'accumulateur hydraulique haute pression (30), et cette énergie de pression ainsi accumulée est susceptible, pour permettre la mise en route du véhicule automobile, d'être retransmise de l'accumulateur hydraulique haute pression (30) à la ligne d'entraînement d'essieu (9), par décharge de cet accumulateur par l'intermédiaire de la transmission (2) de répartition de la puissance, dispositif de propulsion caractérisé en ce que le groupe d'entraînement de secours (36) est également prévu pour assumer cette fonction supplémentaire consistant à être éventuellement activé pendant la marche normale du véhicule automobile pour recharger l'accumulateur hydraulique haute pression (30).

# Fig. 1

Fig. 2

# Fig.3